# EUROPÄISCHE PATENTSCHRIFT

(11) **EP 1 840 049 B1**
(45) Veröffentlichungstag und Bekanntmachung des Hinweises auf die Patenterteilung: **18.06.2008**
(21) Anmeldenummer: 07001223.2
(22) Anmeldetag: 20.01.2007
(51) Int. Cl.: B65G 7/12, F17C 13/08

(54) **Greifelement für eine Gasflasche**
Gripper element for a gas bottle
Elément de prise pour une bouteille de gaz

(30) Priorität: 28.03.2006 DE 202006005081 U; 04.10.2006 DE 202006015296 U; 13.12.2006 DE 202006018940 U
(43) Veröffentlichungstag der Anmeldung: 03.10.2007
(73) Patentinhaber: Rothkegel, Volker, 25485 Hemdingen (DE); Henning, Peter, 25485 Hemdingen (DE)
(72) Erfinder: Rothkegel, Volker, 25485 Hemdingen (DE); Henning, Peter, 25485 Hemdingen (DE)
(74) Vertreter: Richter, Werdermann, Gerbaulet & Hofmann

(56) Entgegenhaltungen:
- DE-U1- 20 212 345
- GB-A- 2 407 529
- US-B1- 6 840 556

## Beschreibung

Die Erfindung betrifft ein Greifelement für eine Gasflasche, die einen Gasflaschenkörper aufweist, gemäß dem Oberbegriff des Anspruchs 1.

Aus dem Stand der Technik sind Gasflaschen bekannt, bei denen Greifelemente integraler Bestandteil sind. Dabei sind die Greifelemente in Form von Handgriffen derart mit der Gasflasche einstückig ausgebildet, dass die Gasflaschen gehoben und fortbewegt werden können. Bei einer nicht geringen Anzahl von Gasflaschen sind solche Greifelemente jedoch nicht vorgesehen. So werden in allen Handwerks- und Industriebetrieben der metallverarbeitenden Industrie technische Gase verwendet, die üblicherweise in 50 Liter Druckgasflaschen geliefert werden und je nach Bauart und Füllungsgrad um die 80 kg wiegen. Ca. 80 kg wiegen 50 Liter Flaschen mit 200 bar Fülldruck. Flaschen mit 300 bar Fülldruck wiegen ca. 115 kg. Die meisten dieser Gasflaschen finden als Schutzgasflaschen Verwendung. Auf den Schweißgeräten sind diese Gasflaschen zumeist auf einem am Schweißgerät befindlichen Podest befestigt. Dieses Podest befindet sich je nach Bauart des Schweißgerätes in einer Höhe von 130 bis 250 mm vom Boden entfernt. Dabei ist je nach Intensität der Schweißarbeiten ein regelmäßiger Wechsel der Gasflaschen vorgesehen.

Das bei diesem Gasflaschenwechsel erforderliche manuelle Heben gestaltet sich aufgrund des hohen Gewichtes der Gasflaschen jedoch als außerordentlich schwierig. Die Möglichkeit, die Flasche mit griffigen und auf einer glatten Oberfläche nicht rutschenden Handschuhen zu umarmen und sodann die Flasche mit einem nach hinten beugenden Oberkörper und einem Ausfallschritt auf das Schweißgerät zu manövrieren, stellt aus Sicherheitsgründen und unter ergonomischen Aspekten keine befriedigende Lösung dar. Es ist auch zu beachten, dass die Gasflaschen aus den Händen gleiten können und dadurch Bein- und/oder Fußverletzungen herbeiführen können.

Beschädigungen der Gasflaschen sowie der Aufprallflächen sind ebenfalls nicht zu vermeiden. Neben den vorstehend geschilderten Verletzungsgefahren besteht außerdem die Möglichkeit, dass sich die Beschäftigten Rückratverletzungen zuziehen, weil sie die Gegenstände nicht ordnungsgemäß anheben und in eine die Wirbelsäule nicht schädigende einwandfreie Transporthaltung bringen.

Die Gasflaschen müssen in einer Werkstatt auch andernorts bewegt werden. Die runden Flaschen können dabei geneigt und auf dem Rand um ihr unteres Ende herum gerollt werden. Sie können auch mit verschiedenen Transportwagen bewegt werden. Aus Sicherheitsgründen ist es jedoch nicht angemessen, die Flaschen zu rollen, wenn sie sich in einer liegenden Position befinden.

Schon diese Beispiele zeigen die Problematik bei der Hebung und Fortbewegung von Gasflaschen.

Daher wurde in der DE 202 12 345 U1 eine Hebevorrichtung für Gasflaschen angegeben, gemäß dem Oberbegriff des Anspruchs 1 mit der der Hebe- bzw. Tragvorgang der Gasflaschen für die Benutzer erleichtert werden soll. Diese Hebevorrichtung besteht aus einem gebogenen Bügel, der um die Mantelfläche der Gasflasche herumführbar ist. An den freien Bügelenden ist jeweils ein L-förmiger Hebel gelenkig in seinem Scheitelpunkt gelagert. Am kurzen L-Schenkel ist jeweils eine als Gummibelag ausgebildete Kontaktfläche zum Kontakt mit der Gasflaschenwandung vorgesehen, während der längere L-Schenkel als Griff ausgebildet ist. Werden die Griffe der Hebevorrichtung von einem oder mehreren Benutzern mit Bezug auf die Gasflasche nach oben bewegt, entsteht eine Hebekraft, die als Anpressdruck zwischen den Gummibelägen der Hebevorrichtung und der Gasflaschenwandung wirkt. Hierdurch wird die Gasflasche mithilfe der Hebevorrichtung sicher gehalten und kann dadurch bequemer und einfacher als mit bloßen Händen von Benutzern bewegt werden.

Die US 6,840,556 B1 sowie die GB 2 407 529 A zeigen jeweils eine Gasflaschenhebevorrichtung, die beide nach einem ähnlichen technischen Prinzip wie die Hebevorrichtung aus der DE 202 12 345 U1 arbeiten. Bei den Vorrichtungen liegen jeweils zwei bogenförmige Anlageelemente um in etwa halben Umfang der Gasflasche an der Wandung der Gasflasche an. In ihren Endbereichen sind beide Anlageelemente gelenkig miteinander verbunden. Ferner sind an beiden Anlageelementen Griffe vorgesehen, mit denen diese nach oben bewegt und eine Hebekraft erzeugt werden kann, die wiederum als Anpressdruck auf die Gasflaschenwandung wirkt.

Es hat sich nun gezeigt, dass bei den aus dem Stand der Technik bekannten Gasflaschenhebevorrichtungen die vorliegenden Hebelverhältnisse nicht immer optimal auf die jeweils zu tragende Gasflasche angepasst sind. Hierdurch können bspw. die Gummibeläge der Kontaktflächen leicht verschlissen werden. Auch kann es bei den vorliegenden Hebevorrichtungen vorkommen, dass die Hebekraft nicht optimal, d. h. in maximal möglicher Höhe, als Anpressdruck auf die Gasflaschenwandung übertragen wird, da die Kontaktflächen bei sämtlichen Hebestellungen nicht immer vollflächig an der Gasflaschenwandung anliegen.

Es ist deshalb Aufgabe der Erfindung, ein Greifelement der eingangs genannten Art zur Verfügung zu stellen, welches unter dem Gesichtspunkt der Ergonomie und Sicherheit das Heben und Fortbewegen von Gasflaschen unbedenklich macht, wobei gleichzeitig eine möglichst optimale Kraftübertragung bei möglichst niedrigen Hebelverhältnissen erreicht werden soll.

Diese Aufgabe wird durch die Merkmale des Anspruches 1 gelöst.

Grundlegende Idee der Erfindung ist es, dass das Greifelement die Gasflasche mit hohem Anpressdruck zwischen der Gasflaschenwandung und den Flächen der Klemmblöcke festhält. Den erforderlichen hohen Anpressdruck kann man erreichen, indem eine Aufwärtsbewegung der Handgriffe in Gang gesetzt wird, so dass die Hebekräfte auf die Fläche der Gasflasche übertragen werden. Auf diese Weise pressen die Klemmblöcke während des Hebevorganges stärker an die Gasflasche, und ein sicherer Griff ohne Rutschgefahr ist hergestellt. Es wird also die Hebewirkung ausgenutzt. Die Klemmblöcke klemmen den Gasflaschenkörper dabei derart ein, dass eine größtmögliche Kontaktfläche erreicht wird. So eingeklemmt kann die Gasflasche nunmehr von einer Person angehoben und bewegt werden.

Ferner ist in dem Klemmblock eine Klemmbacke eingebaut, wobei die Klemmbacke mit einer Bohrung und der Klemmblock mit einer Bohrung für die Aufnahme eines Stiftes versehen sind, wobei die Klemmbacke mit der Bohrung auf den in dem Klemmblock befindlichen Stift gelagert ist. Der Klemmblock kann seitlich mit einer Bohrung eines Durchmessers von 8 mm für die Aufnahme eines Zylinderstiftes versehen sein, der die Klemmbacke trägt. Bevorzugt ist die Klemmbacke mit einer seitlichen Bohrung eines Durchmessers von 8 mm ausgestattet, mit der sie auf den im Klemmblock befindlichen Zylinderstift gelagert ist. Die in dem Klemmblock eingebaute Klemmbacke kann um ca. bis zu 27° von dem Gasflaschenkörper weggedreht werden.

Es ist von Vorteil, dass das Griffelement einen zu einem Bogen gekrümmten Verbindungsbügel aufweist, der an seinen beiden Enden mit jeweils einem Klemmblock versehen ist. Zum Anheben von Gasflaschen kann das Greifelement so insbesondere um runde Gasflaschen gelegt werden, so dass der Verbindungsbügel auf der Bedienerseite liegt.

Eine bevorzugte Ausgestaltung der Erfindung sieht vor, dass die Klemmblöcke jeweils mit einem Gummibelag versehen sind, die in Kontakt mit dem Gasflaschenkörper sind. Dies trägt der Tatsache Rechnung, dass auf den Klemmblöcken befindliche Gummibeläge die Haftung zwischen Klemmblock und Gasflasche erhöhen.

Eine praktikable Variante der Erfindung sieht vor, dass der Klemmblock mit einer Bohrung versehen ist, mit der der Klemmblock auf dem Verbindungsbügel drehbar gelagert ist. Die Klemmbacke kann dabei an der, dem Gasflaschenkörper zugewandten Seite mit einer kleinen, insbesondere quadratischen Fläche versehen sein.

Vorzugsweise ist der Klemmblock an der dem Gasflaschenkörper zugewandten Seite mit einem mit Stahleinlage versehenen Gummiklotz versehen. Auf einer abgeschrägten Seite des Klemmblockes kann ein Handgriff mit einer Schraube in einem Gewinde befestigt sein. Radial um diese Gewindebohrung können drei Bohrungen für Passstifte am Klemmblock angebracht sein. Hier besteht die Möglichkeit, den Handgriff in drei unterschiedlichen Positionen zu fixieren und gegen Verdrehen zu sichern. Der jeweilige Handgriff kann dabei mit einem eingepassten Passstift versehen sein.

Dadurch, dass in den Klemmblock eine Klemmbacke eingebaut ist, kommt es zu einer Erhöhung der Gesamthöhe des Klemmblocks mit der Folge, dass sich für den Klemmvorgang eine niedrigere, aber ausreichende Hebelübersetzung ergibt. Zudem ergibt sich durch die zweiteilige Ausführung des Klemmblocks mit der immer plan an der Gasflaschenwandung liegenden Klemmbacke beim Klemmvorgang eine nicht zu hohe Hebelübersetzungsänderung. Im Rahmen der Erfindung wird ein maximales Hebelverhältnis von 1:2,75 selbst bei extrem einseitiger Belastung nicht überschritten. Ein weiterer Vorteil der zweiteiligen Ausführung des Greifelements ist darin zu sehen, dass die Gummibeläge aufgrund des günstigen Hebelverhältnisses aus einem günstigeren Material gefertigt werden können. Auch können die Gasflaschen noch sicherer gehalten werden.

Vorzugsweise ist das Greifelement derart einstellbar, dass sich die Klemmblöcke unterschiedlichen Durchmessern des Gasflaschenkörpers anpassen. Dies kann vorzugsweise dadurch erreicht werden, dass eine Montage der Klemmblöcke an Einstellschrauben derart erfolgt, dass die Klemmblöcke in Richtung zueinander bewegt oder weg bewegt werden können. Dabei können auch die Handgriffe, insbesondere um den Verbindungsbügel, drehbar gelagert sein, so dass bei einer Nichtbenutzung des Greifelementes eine raumsparende Anordnung desselben möglich ist. Die raumsparende Anordnung zeichnet sich dadurch aus, dass sich die Handgriffe in der Fläche zwischen den beiden Enden des Verbindungsbügels befinden. In einer hier verwendeten Terminologie wird diese raumsparende Anordnung auch als Ruhestellung bezeichnet.

Zwecks einer Dämpfung zwischen dem Gasflaschenkörper und dem Verbindungsbügel kann in einem inneren Scheitelpunkt des Verbindungsbügels ein zusätzlicher Gummibelag angeordnet sein.

Eine praktikable Variante der Erfindung sieht vor, dass in die Klemmblöcke eine Torsionsfeder integriert ist. Die Torsionsfeder kann so die Handgriffe immer in die Ruhelage bringen. Die Torsionsfedern können dabei so stark sein, dass diese beim Ansetzen des Greifelementes an eine Gasflasche die Klemmblöcke derart gegen die Flaschenwandung drücken, dass das Greifelement sich selbst an der Gasflasche hält.

Die Klemmblöcke können aus einem massiven Aluminiumklotz gefertigt sein. Denkbar ist aber auch, dass die Klemmblöcke aus einem anderen und geeignet erscheinendem Material hergestellt sind. Möglich ist, dass die Gummibeläge auf den Klemmblöcken rund oder rechteckig sind. Der Verbindungsbügel kann aus Rundrohr, Quadratrohr oder einem beliebigen anderen Profil gefertigt sein. Er kann aber auch komplett als Gussteil ausgebildet sein. Als Material kann aber auch jedes Material Verwendung finden, solange sichergestellt ist, dass das Material über die nötige Festigkeit verfügt.

Im Rahmen der Erfindung ist auch die Verstellmöglichkeit des Greifelements in einem Bereich von ca. 209 mm bis 232 mm vorgesehen. Dies erweist sich als sinnvoll, da Gasflaschenkörper mit dem Durchmessern 204 mm, 219 mm sowie 229 mm zum Stand der Technik gehören.

Eine weitere vorteilhafte Ausgestaltung der Erfindung sieht daher vor, dass die Klemmblöcke auf Stehbolzen des Verbindungsbügels exzentrisch gebohrten Buchsen aufweisen, wobei bei einer Drehung der Buchsen um ca. 180° eine Weitenverstellung vom Mittelpunkt zum Mittelpunkt der Buchsen zueinander gegeben ist. Die Buchsen können aus Kunststoff sein. Die Weitenverstellung beträgt ca. 23 mm.

Von Vorteil ist es auch, dass die Buchse auf ihrer dem Verbindungsbügel zugewandten Seite eine quadratische Ausbildung einer Stehbolzenbohrung aufweisen, wobei die Buchsen auf den Stehbolzen auf einem quadratischen Ansatz der ansonsten runden Buchsen gegen Verdrehen gesichert sind. Der quadratische Ansatz weist dabei eine Höhe von ca. 10 mm auf, wohingegen die quadratischen Ausbildungen der Stehbolzenbohrung ca. 10 mm tief sind.

Vorzugsweise sind die Buchsen auf Passstiften, die in den Klemmblock eingesetzt sind und in die Bohrungen des Kopfrands greifen, gegen Verdrehen gesichert. Die Anzahl der Passstifte kann dabei variieren.

Zudem haben die Kunststoffbuchsen auf ihrer dem Verbindungsbügel abgewandten Seite eine Aufbohrung des Stehbolzenbohrung auf ein Maß, welches den Einbau einer Druckfeder mit mindestens 10 mm Federweg gewährleistet. Die Druckfeder kann dabei durch einen Federteller gehalten sein, der auf den Stehbolzen der Klemmblöcke beispielsweise mittels eines Federrings gesichert ist. Der Kopf der Kunststoffbuchse ist so groß ausgeführt, dass die auf den Kunststoffbuchsen aufgelagerten Klemmblöcke von den Buchsen gehalten werden. Darüber hinaus ist der Kopf der Kunststoffbuchsen mit einem geränderten, griffigen Rand versehen und hat radial angeordnet jeweils drei Markierungen, die die Stellung der Buchse relativ zu einer Markierung auf dem jeweiligen Klemmblock anzeigt. Auch sieht die Erfindung vor, dass die Klemmblöcke mit einer Bohrung ausgestattet sind, die die Kunststoffbuchse aufnimmt.

Im Rahmen der Erfindung ist es also auch vorgesehen, dass die Exzenterbuchse durch ein Abziehen an ihrem griffig ausgeführten Kopfteil von dem quadratischen Ansatz ihres Stehbolzens in Rastungen von 90° verdreht werden kann, was bei paarweiser Ausführung jeweils einer anderen Gasflaschengröße entspricht. In ihrer Ruhelage wird ein unbeabsichtigtes Verdrehen durch die in dem Kopfteil der Buchse eingebaute Druckfeder verhindert, die die Buchse auf den Stehbolzen und den dort befindlichen Vierkantansatz drückt.

Die Stellung der Exzenterbuchse wird durch die an ihrem Kopf und dem Klemmblock angebrachten Markierungen angezeigt, die auf den gerade greifbaren Flaschendurchmesser dann hinweisen, wenn die Klemmblöcke mit ihrem Gummibelägen zueinander weisen. Mit Hilfe dieser Verstelleinrichtung ist es möglich, mit dem Greifelement gemäß der Erfindung die Gasflaschendurchmesser 204 mm, 219 mm und 229 mm abzudecken. Die Exzenterbuchsen können paarweise verstellt werden, wobei die Einstellung auf die jeweiligen Flaschendurchmesser anhand der Einstellmarken ablesbar ist. Ein Vorteil dieser Ausbildungsform ist es auch, dass kein Werkzeug benötigt wird.

Nachstehend wird die Erfindung anhand der Zeichnungen näher erläutert.
Es zeigen:
- Fig. 1a bis c: ein Greifelement gemäß der Erfindung;
- Fig. 2: ein erfindungsgemäßes Greifelement, welches an einer Gasflasche angeordnet ist;
- Fig. 3a bis 3b: ein Klemmblock in einer Seiten- und Vorderansicht für die Aufnahme einer Klemmbacke;
- Fig. 4a bis 4b: ein Klemmbock in einer Seiten- und Rückansicht für die Aufnahme einer Klemmbacke und
- Fig. 5a bis 5d: eine Klemmbacke in einer Seiten- und Rückansicht sowie in einer Vorder- und Draufsicht.
- Fig. 6: ein Klemmblock in einer Seitenansicht, in dessen Kunststoffbuchse eine Druckfeder eingebaut ist.
- Fig. 7: in Draufsicht eine exzentrisch gebohrte Kunststoffbuchse mit Passstiftbohrungen
- Fig. 8: ein mit Passstiften versehener Klemmblock, auf die mittels der Druckfeder die Kunststoffbuchse gedrückt wird.

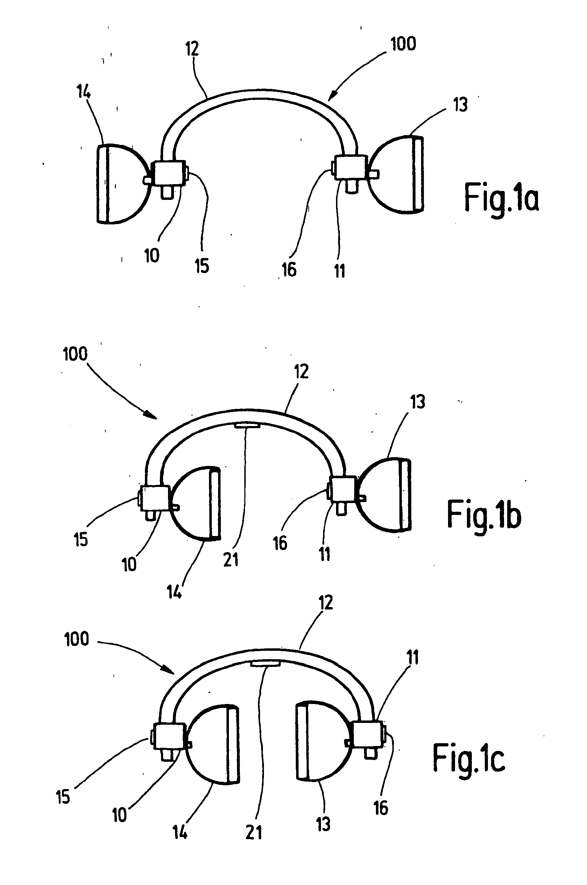

In den Fig. 1a bis c ist ein erfindungsgemäßes Greifelement mit dem Bezugszeichen 100 versehen.

Das Greifelement 100 weist zwei Klemmblöcke 10, 11 auf, welche an einen Gasflaschenkörper anpressbar sind. Zudem kann ein Gasflaschenkörper zwischen den Klemmblöcken 10, 11 des Greifelementes 100 eingeklemmt werden. Die Klemmblöcke 10, 11 sind dabei jeweils mit einem Handgriff 13, 14 versehen. Das Griffelement 100 weist einen zu einem Bogen gekrümmten Verbindungsbügel 12 auf, der an seinen beiden Enden mit jeweils einem der Klemmblöcke 10, 11 versehen ist.

Weiterhin sind die Klemmblöcke 10, 11 jeweils mit einem Gummibelag 15, 16 versehen, die in Kontakt mit dem Gasflaschenkörper sind. Die an den Klemmblöcken 10, 11 befindlichen Gummibeläge 15, 16 erhöhen die Haftung zwischen den Klemmblöcken 10, 11 und einer Gasflasche. Das Greifelement 100 ist derart einstellbar, dass sich die Klemmblöcke 10, 11 unterschiedlichen Durchmessern eines Gasflaschenkörpers anpassen. Auch kann das Greifelement für unterschiedliche Gasflaschendurchmesser gefertigt werden. Die Handgriffe 13, 14, die an den Klemmblöcken 10, 11 drehbar angeordnet sind, können um den Verbindungsbügel 12 gedreht sein.

Aus Fig. 1b geht hervor, dass ein Handgriff 14 durch Drehung eine Position zwischen den Enden des Verbindungsbügels 12 einnimmt. In einer hier verwendeten Terminologie wird die Position des Handgriffs 14 zwischen den Enden des Verbindungsbügels 12 als Ruhelage bezeichnet.

Fig. 1c zeigt, dass sich beide Handgriffe 13, 14 in Ruhelage befinden. Die Ruhelage des Greifelementes 100 hat den Vorteil, dass das Greifelement 100 bei Nichtbenutzung eine raumsparende Stellung einnimmt. In die Klemmblöcke 10, 11 kann eine Torsionsfeder integriert sein, die die Handgriffe 13, 14 immer in die Ruhelage bringen. Die Torsionsfedern können dabei so stark ausgebildet sein, dass sie beim Ansetzen des Greifelementes 100 an eine Gasflasche die Klemmblöcke 10, 11 derart gegen die Flaschenwandung drücken, dass das Greifelement 100 sich selbst an der Gasflasche hält. Des Weiteren kann in dem inneren Scheitelpunkt des Verbindungsbügels 12 ein zusätzlicher Gummibelag 21 angeordnet sein, der für eine Dämpfung zwischen dem Greifelement 100 und einer Gasflasche sorgt.

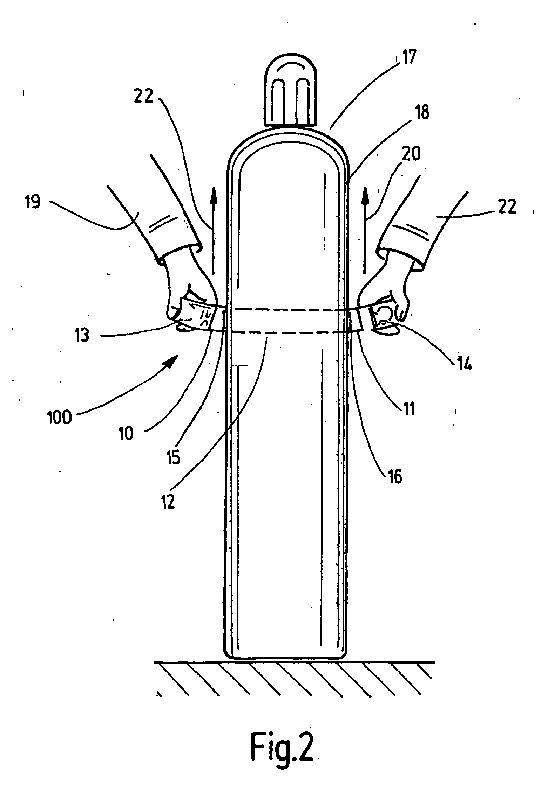

Aus Fig. 2 geht ein Gasflaschenkörper 18 einer Gasflasche 17 hervor, der zwischen zwei Klemmblöcken 10, 11 des Greifelementes 100 eingeklemmt ist. An den Klemmblöcken 10, 11 befinden sich die Handgriffe 13,14. Wenn die Handgriffe 13, 14 nach oben bewegt werden, entsteht eine Hebekraft 20, die während des Hebens des Gasflaschenkörpers 18 über die Klemmblöcke 10, 11 auf den Gasflaschenkörper 18 übertragen werden, mit der Folge, dass die Klemmblöcke 10, 11 an den Gasflaschenkörper 18 stärker angepresst werden. Den erforderlichen hohen Anpressdruck kann man also erzielen, indem die Handgriffe 13, 14 eine Bewegung nach oben erfahren und somit eine Hebewirkung erzielt wird. Die Klemmblöcke 10, 11 klemmen dabei den Gasflaschenkörper 18 so ein, dass die größtmögliche Kontaktfläche erzielt wird. Während der Aufwärtsbewegung der Handgriffe 10, 11 pressen die Klemmblöcke 10, 11 also immer stärker an den Gasflaschenkörper 18, mit der Folge, dass ein sicherer Griff ohne Rutschgefahr hergestellt wird. So eingeklemmt kann die Gasflasche nunmehr von einer oder zwei Personen 19, 22 angehoben und bewegt werden.

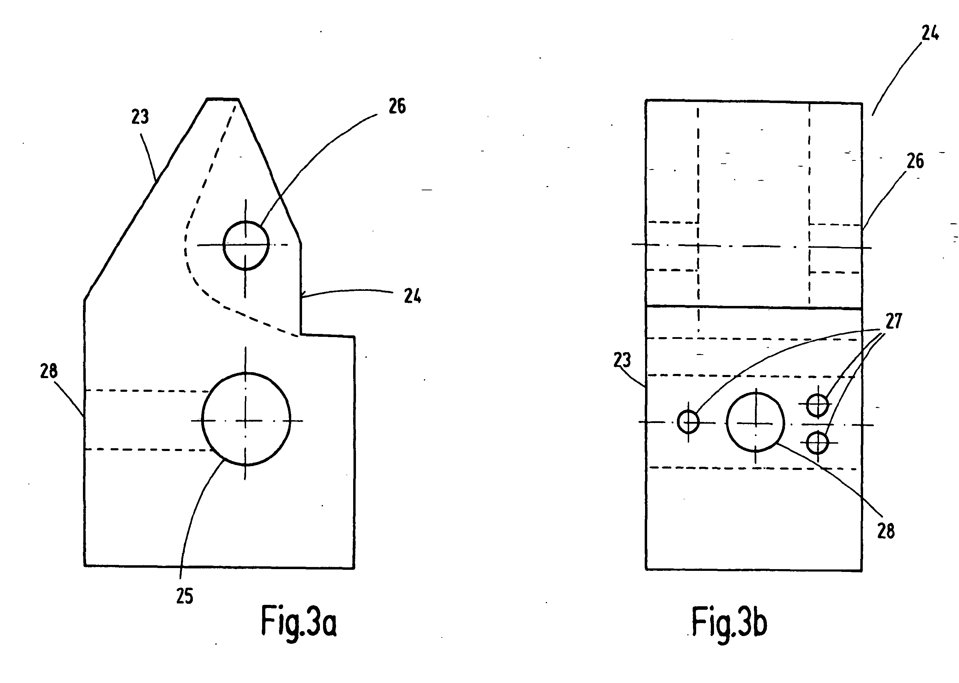

In den Fig. 3a und 3b ist ein Klemmblock 23 des Greifers ausgebildet, in den eine Klemmbacke einbaubar ist. Beide Teile, d. h. der Klemmblock 23 und die Klemmbacke können als Frästeile aus Aluminium ausgebildet sein. Diese Ausführungsform des erfindungsgemäßen Greifelements ist somit zweiteilig. In Fig. 3a, die die Seitenansicht des Klemmblocks 23 zeigt, befindet sich eine Bohrung 25 mit einem Durchmesser von 16 mm. Der Klemmblock 23 ist mit dieser Bohrung 25 auf einem Stehbolzen des Verbindungsbügels 12 drehbar gelagert. Auf der abgeschrägten Seite des Klemmblocks 23 wird ein Handgriff mit einer M10-Schraube 28 befestigt. Der Klemmblock ist zudem mit einer Bohrung 26 mit einem Durchmesser von 8 mm für die Aufnahme eines Zylinderstiftes versehen, der die Klemmbacke trägt. Wie aus Fig. 3b hervorgeht, sind radial um die Gewindebohrung der Schraube 28 drei Bohrungen 27 für Passstifte angebracht. Die Bohrungen 28 können einen Durchmesser von ca. 4 mm aufweisen. Dadurch ist auch die Möglichkeit gegeben, einen Handgriff in drei unterschiedlichen Positionen zu fixieren und gegen Verdrehen zu sichern. Der jeweilige Handgriff ist dabei mit einem eingepressten Passstift versehen.

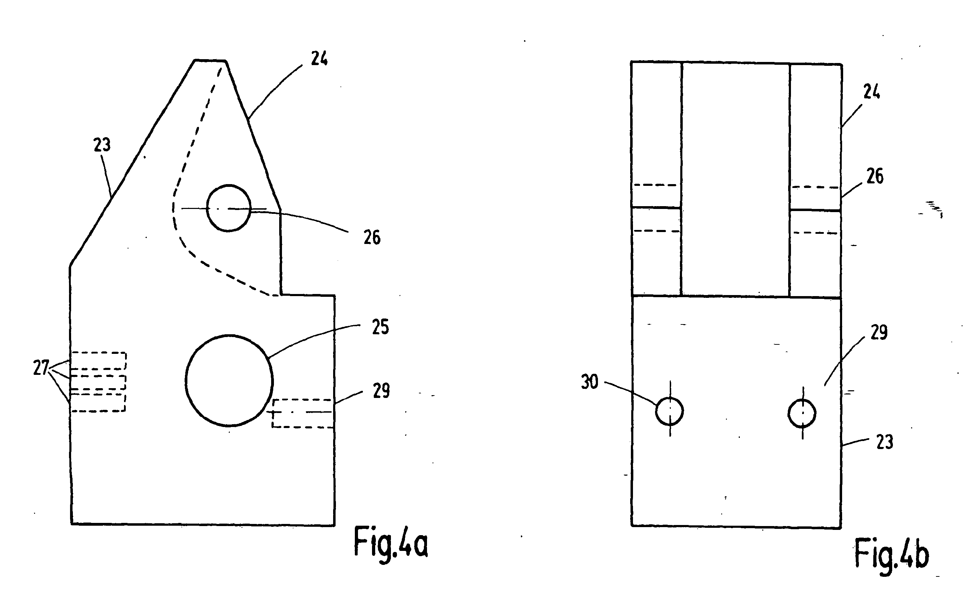

Die Fig. 4a stellt die Seitenansicht des Klemmblocks 23 dar. Wie der Seitenansicht in Fig. 4a zu entnehmen ist, wird der Klemmblock 23 in seinem unteren Teil von parallel zueinander angeordneten Flächen umgrenzt, wohingegen im oberen Teil des Klemmblocks 23 eine schräge Fläche 24 gegeben ist, um die in den Klemmblock 23 eingebaute Klemmbacke um ca. 25° nach oben bzw. hinten klappen zu können. Die in Fig. 4b gezeigte Vorderansicht des Klemmblocks 23 weist zwei Schrauben M5 auf, die mit dem Bezugszeichen 29, 30 versehen sind. Auf dieser Seite des Klemmblocks 23 kann ein mit Stahleinlage der Dicke 2 mm versehener Gummiklotz der Maße 40 mm x 40 mm x 20 mm mit den zwei Schrauben 29, 30 befestigt werden. Ein solcher Gummiklotz kann bei Verschleiß des Belages auf der Klemmbacke als Ersatz Verwendung finden. Zwischen den Teilen 34, 35, die mit dem Klemmblock 23 einstückig ausgebildet sind, befindet sich der Teil der Klemmbacke, der mit einer Bohrung versehen ist, mit der die Klemmbacke auf dem in dem Klemmblock 23 befindlichen Stift gelagert ist, der durch die Bohrung 26 des Klemmblocks 23 geführt ist.

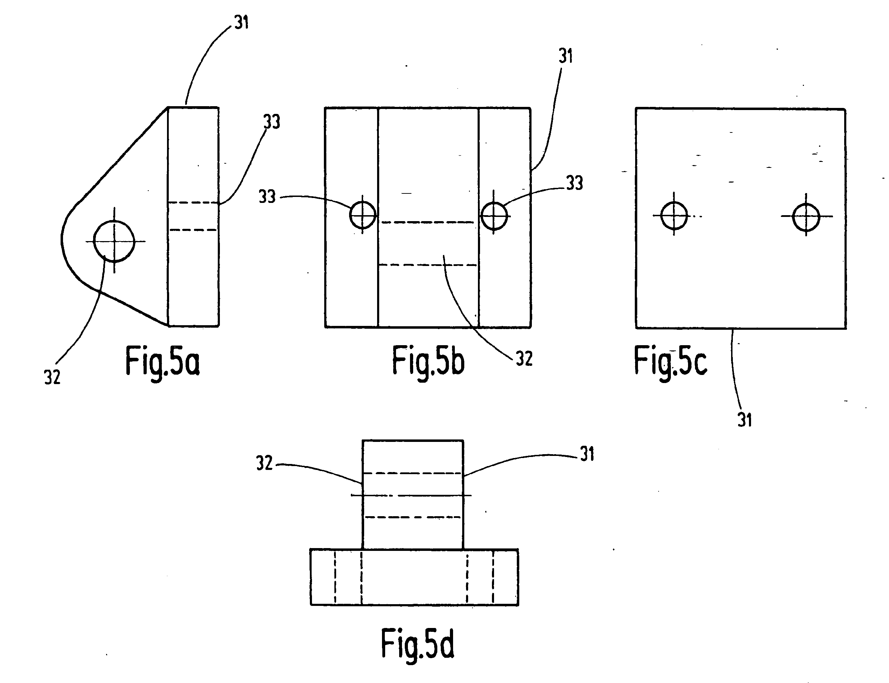

In den Fig. 5a und 5b ist eine Klemmbacke 31 in einer Seiten- bzw. Rückansicht dargestellt. Die Klemmbacke 31 ist mit einer Bohrung 32 versehen. Mit dieser Bohrung 32 ist die Klemmbacke 31 auf den in dem Klemmblock 23 befindlichen Stift gelagert. Die Bohrung 32 kann dabei einen Durchmesser von ca. 8 mm aufweisen. Die Klemmbacke 31 wird dabei derart zwischen die in Fig. 4b gezeigten Teile 34, 35 des Klemmblocks 23 integriert, dass die Bohrung 32 der Klemmbacke 31 mit der Bohrung 26 des Klemmblocks 23 aneinander liegen. Die Fig. 5c und 5d zeigen die Klemmbacke 31 in einer Vorder- und Draufsicht. Mit Hilfe der Schrauben 33 kann die plane, quadratische Fläche der zum Flaschenkörper zugewandten Seite mit einem Gummiklotz versehen sein.

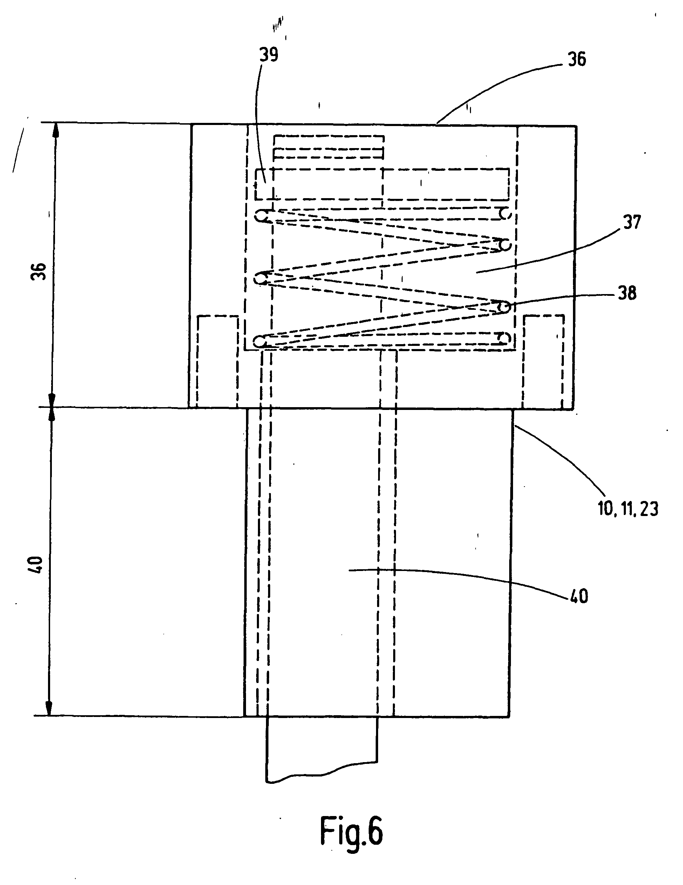

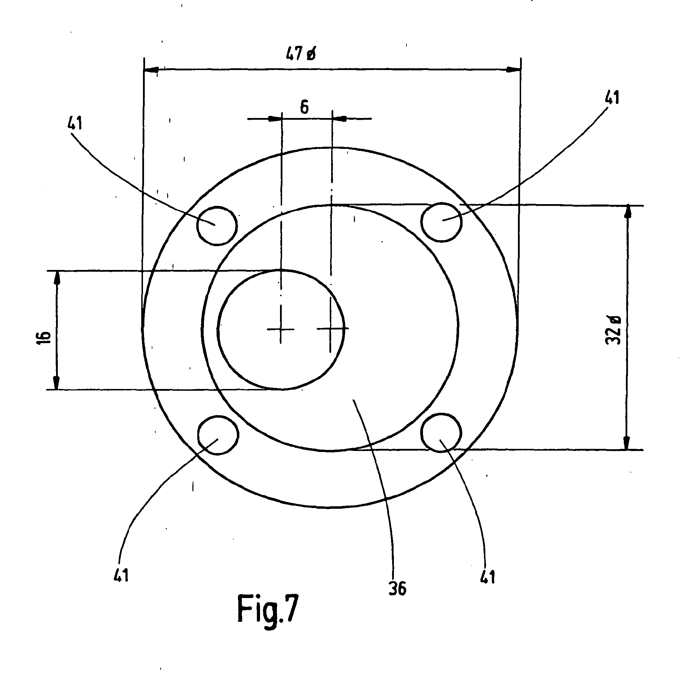

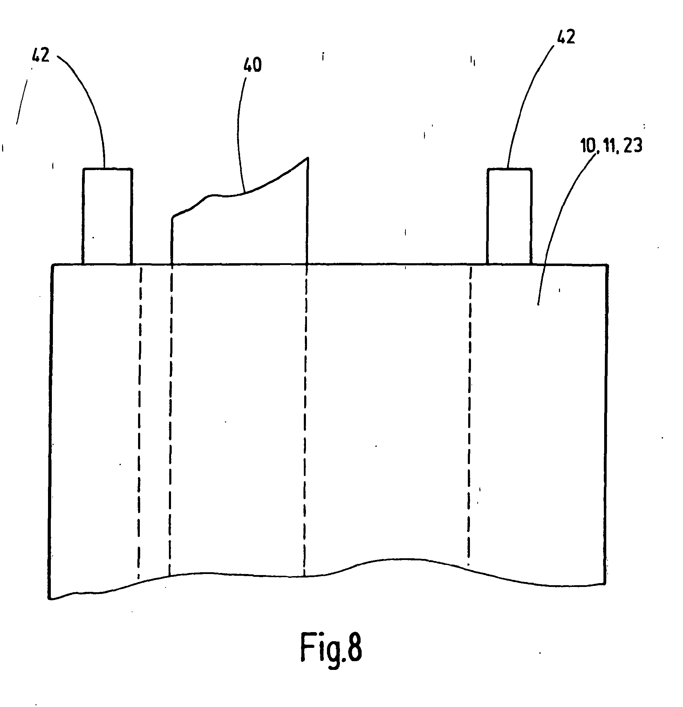

Die Fig. 6 bis 8 zeigen den in einen Klemmblock integrierten Exzender. Bei dem in den Fig. 6 bis 8 gezeigten Klemmblock kann es sich entweder um den Klemmblock 10, 11 oder 23 handeln. Dazu haben die Kunststoffbuchsen, von denen in Fig. 6 eine Kunststoffbuchse 36 in Seitenansicht gezeigt ist, auf ihrer Kopfseite eine Aufbohrung 37 einer Stehbolzenbohrung auf ein Maß, das den Einbau einer Druckfeder 38 mit mindestens 10 mm Federweg gewährleistet. Die in Fig. 6 und 7 angegebenen Zahlen geben die Längsmaße bzw. Durchmesser in mm an. Die Druckfeder 38 wird durch einen Federteller 39 gehalten, der auf dem Stehbolzen 40 des Klemmblocks 10, 11, 23 aufgebracht ist. Der Klemmblock 10, 11, 23 ist dabei auf dem Stehbolzen 40 mit der Kunststoffbuchse 36 gelagert. Der Klemmblock 10, 11, 23 ist dabei mit einer Bohrung versehen, die die Kunststoffbuchse 36 aufnimmt, wobei der Kopf der Kunststoffbuchsen 36 so groß ausgeführt ist, dass der auf der Kunststoffbuchse 36 aufgelagerte Klemmblock 10, 11, 23 von der Buchse 36 gehalten wird. Wie aus Fig. 7 hervorgeht, hat der Rand des Kopfes der Kunststoffbuchse 36 auf seiner dem Klemmblock 10, 11, 23 zugewandten Seite vier Passstiftbohrungen 41 in 90° Anordnung. Die Kunststoffbuchse 36 ist dabei exzentrisch derart gebohrt, dass eine Drehung der Buchse 36 um jeweils 180° eine Weitenverstellung der Klemmblöcke 10, 11, 23 zueinander von insgesamt 23 mm zur Folge hat. Fig. 8 zeigt, dass die Kunststoffbuchse 36 auf vier Passstiften 42, die in den Klemmblock 10, 11, 23 eingesetzt sind und in die Bohrungen 41 des Kopfrandes greifen, gegen Verdrehen gesichert sind. Die Anzahl der Passstifte 42 kann dabei auch variieren.

Durch ein Abziehen an ihrem griffig ausgeführten Kopfteil von den seitlich in den Klemmblock 10, 11, 23 eingesetzten Passstiften 42, kann die Buchse 36 in Rastungen von 90° verdreht werden, was bei paarweiser Ausführung jeweils einer anderen Gasflaschengröße entspricht. In ihrer Ruhelage wird ein unbeabsichtigtes Verdrehen der Buchse 36 durch die in ihren Kopfteilen eingebaute Druckfeder 38 verhindert, die die Buchse 36 auf den Klemmblock 10, 11, 23 und die dort befindlichen Passstifte 42 drückt. Die Stellung der Buchse 36 wird durch die an ihrem Kopf und dem Klemmblock 10, 11, 23 angebrachte Markierung angezeigt, die auf den gerade greifbaren Gasflaschendurchmesser dann hinweisen, wenn die Klemmblöcke 10, 11, 23 mit ihrem Gummibelägen zueinander weisen. Mit Hilfe dieser Verstelleinrichtung ist es möglich, mit einem Gasflaschengreifer insgesamt drei unterschiedliche Gasflaschendurchmesser abzudecken, vorzugsweise von 204, 219 und 224 mm Durchmesser. Die Buchse(n) 36 werden dabei paarweise verstellt und die Einstellung auf den jeweiligen Gasflaschendurchmesser ist anhand von Einstellmarken ablesbar.

### Bezugszeichenliste

- 100: Greifelement
- 10, 11: Klemmblock
- 12: Verbindungsbügel
- 13, 14: Handgriff
- 15, 16: Gummibelag
- 17: Gasflasche
- 18: Gasflaschenkörper
- 19: Person
- 20: Hebekraft
- 21: zusätzlicher Gummibelag
- 22: Person
- 23: Klemmblock
- 24: schräge Fläche
- 25: Bohrung
- 26: Bohrung
- 27: Bohrungen
- 28: M10-Schrauben
- 29: Schraube
- 30: Schraube
- 31: Klemmbacke
- 32: Bohrung
- 33: Schraube
- 34: Teil
- 35: Teil
- 36: Kunststoffbuchse
- 37: Aufbohrung
- 38: Druckfeder
- 39: Federteller
- 40: Stehbolzen
- 41: Passstiftbohrung
- 42: Passstifte

## Patentansprüche

1. Greifelement (100) für eine Gasflasche (17), die einen Gasflaschenkörper (18) aufweist,
wobei
der Gasflaschenkörper (18) zwischen zwei Klemmblöcken (10, 11) des Greifelementes (100) einklemmbar ist, welche an den Gasflaschenkörper anpressbar sind, und wobei die Klemmblöcke (10, 11, 23) mit jeweils einem Handgriff (13, 14) versehen sind, welche zur Übertragung einer Hebekraft (20) als Anpressdruck zwischen den Klemmblöcken (10,11) und dem Gasflaschenkörper (18) nach oben bewegbar sind,
**dadurch gekennzeichnet,**
**dass** in dem Klemmblock (23) eine Klemmbacke (31) eingebaut ist, wobei die Klemmbacke (31) mit einer Bohrung (32) und der Klemmblock (23) mit einer Bohrung (26) für die Aufnahme eines Stiftes versehen sind, wobei die Klemmbacke (31) mit der Bohrung (32) auf dem in den Klemmblock (23) befindlichen Stift gelagert ist und bis zu 27° von dem Gasflaschenkörper (18) wegdrehbar ist.

2. Greifelement nach Anspruch 1,
**dadurch gekennzeichnet,**
**dass** das Greifelement (100) einen zu einem Bogen gekrümmten Verbindungsbügel (12) aufweist, der an seinen beiden Enden mit jeweils einem der Klemmböcke (10, 11, 23) versehen ist, die mit einem Gummibelag (15, 16) versehen sind, die in Kontakt mit dem Gasflaschenkörper (100) sind.

3. Greifelement nach einem der Ansprüche 1 oder 2,
**dadurch gekennzeichnet,**
**dass** der Klemmblock (23) mit einer Bohrung (25) versehen ist, mit der der Klemmblock (23) auf dem Verbindungsbügel (12) drehbar gelagert ist.

4. Greifelement nach einem der Ansprüche 1 bis 3,
**dadurch gekennzeichnet,**
**dass** die Klemmbacke (31) an der dem Gasflaschenkörper (18) zugewandten Seite mit einer kleinen, bevorzugterweise quadratischen Fläche versehen ist, die einen Gummiklotz trägt.

5. Greifelement nach einem der Ansprüche 1 bis 4,
**dadurch gekennzeichnet,**
**dass** der Handgriff (13, 14) mit einer Schraube befestigt ist und weitere Bohrungen (27) für Passstifte am Klemmblock (23) vorgesehen sind.

6. Greifelement nach einem der Ansprüche 1 bis 5,
**dadurch gekennzeichnet,**
**dass** das Greifelement (100) derart einstellbar ist, dass sich die bevorzugterweise runde und/oder rechteckige Gummibeläge tragenden Klemmblöcke (10, 11, 23) unterschiedlichen Durchmessern des Gasflaschenkörpers (18) anpassen, wobei die Handgriffe (13, 14) drehbar gelagert sind.

7. Greifelement nach einem der Ansprüche 1 bis 6,
**dadurch gekennzeichnet,**
**dass** in einem inneren Scheitelpunkt des bevorzugterweise als Rundrohr oder als Quadratrohr und als Gussteil ausgebildeter Verbindungsbügels (12) ein zusätzlicher Gummibelag angeordnet ist.

8. Greifelement nach einem der Ansprüche 1 bis 7,
**dadurch gekennzeichnet,**
**dass** in die Klemmblöcke (10, 11) eine Torsionsfeder integriert ist.

9. Greifelement nach einem der Ansprüche 1 bis 8,
**dadurch gekennzeichnet,**
**dass** der Klemmblock (23) und die Klemmbacke (31) als Frästeile ausgebildet sind.

10. Greifelement nach einem der Ansprüche 1 bis 9,
**dadurch gekennzeichnet,**
**dass** die Klemmblöcke (10, 11, 23) auf Stehbolzen (40) des Verbindungsbügels (12) mit exzentrisch gebohrten bevorzugterweise aus Kunststoff bestehende Buchsen (36) gelagert sind, wobei bei einer Drehung der Buchsen (36) um ca. 180° eine Weitenverstellung von Mittelpunkt zu Mittelpunkt der Buchsen (36) zueinander gegeben ist.

11. Greifelement nach einem der Ansprüche 1 bis 9,
**dadurch gekennzeichnet,**
**dass** die Klemmblöcke (10, 11, 23) auf Stehbolzen (40) des Verbindungsbügels (12) mit exzentrisch gebohrten bevorzugterweise aus Kunststoff bestehende Buchsen (36) gelagert sind, wobei bei einer Drehung der Buchsen (36) um jeweils 180° eine Weitenverstellung der Klemmblöcke (10, 11, 23) zueinander von insgesamt 23 mm zur Folge hat.

12. Greifelement nach einem der Ansprüche 10 oder 11,
**dadurch gekennzeichnet,**
**dass** die Buchsen (36) auf ihrer dem Verbindungsbügel (12) zugewandten Seite eine quadratische Ausbildung einer Stehbolzenbohrung aufweisen, wobei die Buchsen (36) auf den Stehbolzen (40) auf einem quadratischen Ansatz gegen Verdrehen gesichert sind.

13. Greifelement nach einem der Ansprüche 10 bis 12,
**dadurch gekennzeichnet,**
**dass** die Buchsen (36) auf ihrer dem Verbindungsbügel (12) abgewandten Seite eine Aufbohrung (37) der Stehbolzenbohrung aufweisen, wobei eine Druckfeder (38) in die Aufbohrung (37) einbaubar ist, die durch einen Federteller (39) gehalten ist, der auf dem Stehbolzen (40) der Klemmblöcke (10, 11 23), insbesondere mittels eines Federringes, gesichert ist.

14. Greifelement nach einem der Ansprüche 10 bis 13,
**dadurch gekennzeichnet,**
**dass** ein Halt der auf den Buchsen (36) aufgelagerten Klemmblöcke (10, 11, 23) durch die Buchsen (36) gegeben ist, wobei die Buchsen (36) einen Kopf aufweisen, der mit einem geränderten griffigen Rand versehen ist, wobei der Rand des Kopfes auf seiner dem Klemmblock (10, 11, 23) zugewandten Seite bevorzugterweise vier Passstiftbohrungen (41) in 90° Anordnung aufweist.

15. Greifelement nach Anspruch 14,
**dadurch gekennzeichnet,**
**dass** die Buchsen (36) auf Passstiften (42), die in den Klemmblock (10, 11, 23) eingesetzt sind und die Bohrungen (41) des Kopfrandes greifen, gegen Verdrehen gesichert sind, wobei die Buchsen (36) auf den Passstiften (42) gegen Verdrehen gesichert sind.

16. Greifelement nach einem der Ansprüche 10 bis 15,
**dadurch gekennzeichnet,**
**dass** die Buchsen (36) auf ihrer Kopfseite eine Aufbohrung (37) einer Stehbolzenbohrung auf ein Maß haben, das den Einbau einer Druckfeder (38) mit mindestens 10 mm Federweg gewährleistet, wobei die Druckfeder (38) durch einen Federteller (39) gehalten ist, der auf dem Stehbolzen (40) der Klemmblöcke (10, 11, 23) aufgebracht ist.

17. Greifelement nach einem der Ansprüche 1 bis 16,
**dadurch gekennzeichnet,**
**dass** der Kopf der Buchsen (36) radial angeordnete Markierungen aufweist, die die Stellung der Buchse (36) relativ zu einer Markierung auf dem jeweiligen Klemmblock (10, 11, 23) anzeigt.

18. Greifelement nach einem der Ansprüche 10 bis 17,
**dadurch gekennzeichnet,**
**dass** die Klemmblöcke (10, 11, 23) mit einer Bohrung versehen sind, die die Buchse (36) aufnimmt, die bevorzugterweise rund ausgeführt ist.

## Claims

1. Gripper element (100) for a gas bottle (17) which has a gas bottle body (18), whereby
the gas bottle body (18) can be clamped between two clamping blocks (10, 11) of the gripper element (100) which can be pressed against the gas bottle body and whereby the clamping blocks (10, 11, 23) are provided with respectively one handle (13, 14) which are movable upwards for transmitting a lifting force (20) as clamping pressure between the clamping blocks (10, 11) and the gas bottle body (18),
**characterized in that**
a clamping jaw (31) is mounted in the clamping block (23), whereby the clamping jaw (31) is provided with a bore (32) and the clamping block (23) with a bore (26) for receiving a pin, whereby the clamping jaw (1) with the bore (32) is positioned on the pin which is situated in the clamping block (23) and can be turned away up to 27° from the gas bottle body (18).

2. Gripper element according to claim 1,
**characterized in that**
the gripper element (100) has a connection stirrup (12) bent to a bow which is provided at its both ends with respectively one of the clamping blocks (10, 11, 23) which are provided with a rubber lining (15, 16) which is in contact with the gas bottle body (100).

3. Gripper element according to any of the claims 1 or 2,
**characterized in that**
the clamping block (23) is provided with a bore (25) with which the clamping block (23) is positioned rotatable on the connection stirrup (12).

4. Gripper element according to any of the claims 1 to 3,
**characterized in that**
the clamping jaw (31) is provided on the side turned to the gas bottle body (18) with a small in particular square surface which carries a rubber block.

5. Gripper element according to any of the claims 1 to 4,
**characterized in that**
the handle (13, 14) is fixed with a screw and further bores (27) are provided for fitting pins on the clamping block (23).

6. Gripper element according to any of the claims 1 to 5,
**characterized in that**
the gripper element (100) is adjustable in such a manner that the clamping blocks (10, 11, 23) which carry preferably round and/or rectangular rubber linings adapt themselves to different diameters of the gas bottle body (18), whereby the handles (13, 14) are positioned rotatable.

7. Gripper element according to any of the claims 1 to 6,
**characterized in that**
an additional rubber lining is arranged in an inner vertex of the connection stirrup (12) which is preferably configured as round tube or as square tube and as cast part.

8. Gripper element according to any of the claims 1 to 7,
**characterized in that**
a torsion spring is integrated into the clamping blocks (10, 11).

9. Gripper element according to any of the claims 1 to 8,
**characterized in that**
the the clamping block (23) and the clamping jaw (31) are configured as milled parts.

10. Gripper element according to any of the claims 1 to 9,
**characterized in that**
the clamping blocks (10, 11, 23) are positioned on stud bolts (40) of the connection stirrup (12) with eccentrically bored bushes preferably made of plastics (36), whereby during a rotation of the bushes (36) about approximately 180° there is a width adjustment from centre to centre of the bushes (36) to each other.

11. Gripper element according to any of the claims 1 to 9,
**characterized in that**
the clamping blocks (10, 11, 23) are positioned on stud bolts (40) of the connection stirrup (12) with eccentrically bored bushes preferably made of plastics (36), whereby a rotation of the bushes (36) about respectively 180° results in a width adjustment of the clamping blocks (10, 11, 23) to each other of on the whole 23 mm.

12. Gripper element according to any of the claims 10 to 11,
**characterized in that**
the bushes (36) have a square configuration of a stud bolt bore on their side turned to the connection stirrup (12), whereby the bushes (36) are secured against torsion on the stud bolts (40) on a square stud.

13. Gripper element according to any of the claims 10 to 12,
**characterized in that**
the bushes (36) have on their side opposite the connection stirrup (12) a bored hole (37) of the stud bolt bore, whereby a compression spring (38) can be mounted into the bored hole (37) which is held by a spring plate (39) which is secured on the stud bolt (40) of the clamping blocks (10, 11, 23), in particular by means of a spring washer.

14. Gripper element according to any of the claims 10 to 13,
**characterized in that**
there is a hold of the clamping blocks (10, 11, 23) positioned on the bushes (36) due to the bushes (36), whereby the bushes (36) have a head which is provided with a knurled handy edge, whereby the edge of the head has preferably 4 fitting pin bores (41) in 90° arrangement on its side turned to the clamping block (10, 11, 23).

15. Gripper element according to claims 14,
**characterized in that**
the bushes (36) are secured against torsion on fitting pins (42) which are inserted in the clamping block (10, 11, 23) and pass through the bores (41) of the head edge, whereby the bushes (36) are secured against torsion on the fitting pins (42).

16. Gripper element according to any preceding claims 10 to 15,
**characterized in that**
the bushes (36) have on their head side a bored opening (37) of the stud bolt bore with a dimension which guarantees the fitting of a compression spring (38) with at least 10 mm spring excursion, whereby the compression spring (38) is held by a spring plate (39) which is mounted on the stud bolt (40) of the clamping blocks (10, 11, 23).

17. Gripper element according to any of the claims 1 to 16,
**characterized in that**
the head of the bushes (36) has radially arranged marks which indicate the position of the bush (36) relatively to a mark on the respective clamping block (10, 11, 23).

18. Gripper element according to any of the claims 10 to 17,
**characterized in that**
the clamping blocks (10, 11, 23) are provided with a bore which receives the bush (36) which is preferably configured round.

## Revendications

1. Elément de prise (100) pour une bouteille de gaz (17) qui présente un corps de bouteille de gaz (18),
le corps de bouteille de gaz (18) pouvant être serré entre deux blocs de serrage (10, 11) de l'élément de prise (100) qui peuvent être pressés contre le corps de bouteille de gaz et les blocs de serrage (10, 11, 23) étant pourvus de respectivement une poignée (13, 14) qui peut être mobile vers le haut pour transmettre une force de levage (20) comme pression de serrage entre les blocs de serrage (10, 11) et le corps de la bouteille de gaz (18),
**caractérisé en ce**
**qu'**une mâchoire de serrage (31) est montée dans le bloc de serrage (23), la mâchoire de serrage (31) étant pourvue d'une forure (32) et le bloc de serrage (23) d'une forure (26) pour loger une cheville, la mâchoire de serrage (31) avec la forure (32) étant positionnée sur la cheville qui se trouve dans le bloc de serrage (23) et pouvant être détournée jusqu'à 27° du corps de la bouteille de gaz (18).

2. Elément de prise selon la revendication 1,
**caractérisé en ce**
**que** l'élément de prise (100) présente un étrier de raccord (12) courbé en un arc qui est pourvu, à ses deux extrémités, de respectivement l'un des blocs de serrage (10, 11, 23) qui sont pourvus d'un revêtement en caoutchouc (15, 16) qui est en contact avec le corps de la bouteille de gaz (100).

3. Elément de prise selon l'une des revendications 1 ou 2,
**caractérisé en ce**
**que** le bloc de serrage (23) est pourvu d'une forure (25) avec laquelle le bloc de serrage (23) est positionné rotatif sur l'étrier de raccord (12).

4. Elément de prise selon l'une des revendications 1 à 3,
**caractérisé en ce**
**que** la mâchoire de serrage (31) est pourvue, sur le côté qui est tourné vers le corps de la bouteille de gaz (18), d'une petite surface, de préférence carrée, qui porte un bloc de caoutchouc.

5. Elément de prise selon l'une des revendications 1 à 4,
**caractérisé en ce**
**que** la poignée (13, 14) est fixée avec une vis et que d'autres forures (27) sont prévues pour des goupilles de serrage sur le bloc de serrage (23).

6. Elément de prise selon l'une des revendications 1 à 5,
**caractérisé en ce**
**que** l'élément de prise (100) est ajustable de telle manière que les blocs de serrage (10, 11, 23) qui portent des revêtements de caoutchouc de préférence ronds et/ou rectangulaires s'adaptent à différents diamètres du corps de la bouteille de gaz (18), les poignées (13, 14) étant positionnées rotatives.

7. Elément de prise selon l'une des revendications 1 à 6,
**caractérisé en ce**
**qu'**un revêtement de caoutchouc supplémentaire est placé dans un sommet intérieur de l'étrier de raccord (12) qui est configuré de préférence comme un tube rond ou un tube carré et comme pièce coulée.

8. Elément de prise selon l'une des revendications 1 à 7,
**caractérisé en ce**
**qu'**un ressort de torsion est intégré dans les blocs de serrage (10,11).

9. Elément de prise selon l'une des revendications 1 à 8,
**caractérisé en ce**
**que** le bloc de serrage (23) et la mâchoire de serrage (31) sont configurés comme des pièces fraisées.

10. Elément de prise selon l'une des revendications 1 à 9,
**caractérisé en ce**
**que** les blocs de serrage (10, 11, 23) sont positionnés sur des goujons (40) de l'étrier de raccord (12) avec des douilles (36) forées excentriquement, de préférence en plastique, cependant que lors d'une rotation des douilles (36) d'environ 180°, il y a un ajustage en largeur de centre à centre des douilles (36) l'une par rapport à l'autre.

11. Elément de prise selon l'une des revendications 1 à 9,
**caractérisé en ce**
**que** les blocs de serrage (10, 11, 23) sont positionnés sur des goujons (40) de l'étrier de raccord (12) avec des douilles (36) forées excentriquement, de préférence en plastique, cependant que lors d'une rotation des douilles (36) d'environ 180°, il y a un ajustage en largeur des blocs de serrage (10, 11, 23) l'un par rapport à l'autre de 23 mm en tout.

12. Elément de prise selon l'une des revendications 10 ou 11,
**caractérisé en ce**
**que** les douilles (36) présentent, sur leur côté tourné vers l'étrier de raccord (12), une configuration carrée d'une forure de goujon, les douilles (36) étant bloquées contre la torsion sur les goujons (40) sur un épaulement carré.

13. Elément de prise selon l'une des revendications 10 à 12,
**caractérisé en ce**
**que** les douilles (36) présentent, sur leur côté opposé à l'étrier de raccord (12), un alésage (37) de la forure de goujon, un ressort de compression (38) pouvant être inséré dans l'alésage (37) qui est maintenu par une cuvette de ressort (39) qui est bloquée sur le goujon (40) des blocs de serrage (10, 11, 23), en particulier au moyen d'une rondelle-ressort.

14. Elément de prise selon l'une des revendications 10 à 13,
**caractérisé en ce**
**qu'**il y a un support des blocs de serrage (10, 11, 23) positionnés sur les douilles (36) grâce aux douilles (36), les douilles (36) présentant une tête qui est pourvue d'un bord moleté bien en main, le bord de la tête présentant, sur son côté tourné vers le bloc de serrage (10, 11, 23), de préférence quatre forures pour goupilles de serrage (41) en un arrangement à 90°.

15. Elément de prise selon la revendication 14,
**caractérisé en ce**
**que** les douilles (36) sont bloquées contre la torsion sur des goupilles de serrage (42) qui sont insérées dans le bloc de serrage (10, 11, 23) et qui s'engrènent dans les forures (41) du bord de tête, les douilles (36) étant bloquées contre la torsion sur les goupilles de serrage (42).

16. Elément de prise selon l'une des revendications 10 à 15,
**caractérisé en ce**
**que** les douilles (36) ont, sur leur côté de tête, un alésage (37) d'une forure de goujon avec une dimension qui garantit le montage d'un ressort de compression (38) avec un allongement du ressort d'au moins 10 mm, le ressort de compression (38) étant maintenu par une cuvette de ressort (39) qui est montée sur le goujon (40) des blocs de serrage (10, 11, 23).

17. Elément de prise selon l'une des revendications 1 à 16,
**caractérisé en ce**
**que** la tête des douilles (36) présente des marquages placés radialement qui indiquent la position de la douille (36) par rapport à un marquage sur le bloc de serrage respectif (10, 11, 23).

18. Elément de prise selon l'une des revendications 10 à 17,
**caractérisé en ce**
**que** les blocs de serrage (10, 11, 23) sont pourvus d'une forure qui loge la douille (38) qui est configurée de préférence ronde.
